# FASCICULE DE BREVET EUROPEEN

(11) **EP 4 353 563 B1**
(45) Date de publication et mention de la délivrance du brevet: **31.12.2025**
(21) Numéro de dépôt: 23202800.1
(22) Date de dépôt: 10.10.2023
(51) Int. Cl.: B61G 5/08, B61C 17/02, F16L 37/56

(54) **DISPOSITIF DE CONNEXION ENTRE UN SYSTÈME DE STOCKAGE D'HYDROGÈNE ET UNE UNITÉ CONSOMMATRICE D'HYDROGÈNE ET ENSEMBLE D'ALIMENTATION EN HYDROGÈNE D'UN VÉHICULE**
VERBINDUNGSVORRICHTUNG ZWISCHEN EINEM WASSERSTOFFSPEICHERSYSTEM UND EINER WASSERSTOFFSPEICHEREINHEIT UND EINER WASSERSTOFFVERSORGUNGSANORDNUNG EINES FAHRZEUGS
CONNECTION DEVICE BETWEEN A HYDROGEN STORAGE SYSTEM AND A HYDROGEN CONSUMING UNIT AND HYDROGEN SUPPLYING ASSEMBLY OF A VEHICLE

(30) Priorité: 11.10.2022 FR 2210412
(43) Date de publication de la demande: 17.04.2024
(73) Titulaire: ALSTOM Transport SA, 93400 St-Ouen sur Seine (FR)
(72) Inventeur: VANDAMME, Thibault, 90000 BELFORT (FR); CEBE, Christian, 90000 BELFORT (FR)
(74) Mandataire: Plasseraud IP

(56) Documents cités:
- EP-B1- 3 802 164
- CN-U- 214 171 950
- US-A1- 2010 307 636
- US-A1- 2011 012 338

## Description

La présente invention concerne un dispositif de connexion entre un système de stockage d'hydrogène et une unité consommatrice d'hydrogène montée à bord d'un véhicule, notamment d'un véhicule ferroviaire, comprenant :
- une première plaque comprenant une première interface de connexion délimitant un premier conduit connecté fluidiquement au système de stockage d'hydrogène ;
- une deuxième plaque comprenant une deuxième interface de connexion délimitant un second conduit connecté fluidiquement à l'unité consommatrice d'hydrogène.

La première plaque et la deuxième plaque sont mobiles l'une par rapport à l'autre entre une position de connexion et une position de déconnexion du dispositif de connexion.

Dans la position de connexion, la première interface de connexion est connectée à la deuxième interface de connexion, autorisant une circulation d'hydrogène entre le premier conduit et le second conduit.

Dans la position de déconnexion, la première interface de connexion est écartée de la deuxième interface de connexion.

Le dispositif de connexion comprend, en outre, une unité de verrouillage du dispositif de connexion en position de connexion.

Dans les véhicules ferroviaires roulants à traction à hydrogène, une réserve d'hydrogène est généralement connectée de manière amovible afin d'alimenter en hydrogène le véhicule.

La réserve d'hydrogène et le véhicule sont connectés entre eux par une pluralité de connexions, dont par exemple un conduit d'alimentation en hydrogène, une connexion hydraulique et une connexion électrique.

Lors d'un remplacement de la réserve vide par une réserve pleine, chacune de ces connexions doit être connectées ou déconnectées de manière séquentielle et indépendante.

Cependant, un tel montage n'est pas entièrement satisfaisant, en ce qu'il peut arriver qu'une connexion soit défectueuse ou oubliée. Il y a dans ce cas des risques, notamment de fuites d'hydrogènes.

De plus, un tel montage est couteux en temps, d'autant plus que la fréquence de remplacement de la réserve est élevée. La réserve d'hydrogène doit par exemple être remplacée avant chaque trajet.

Les documents CN 214 171 950 U and US 2010/307636 A1 décrivent des exemples connus de dispositifs de connexion entre un système de stockage d'hydrogène et une unité consommatrice d'hydrogène.

Un des buts de l'invention est de pallier ces inconvénients et, en particulier, de proposer un dispositif de connexion entre un système de stockage d'hydrogène et une unité consommatrice d'hydrogène sécurisant la connexion et la déconnexion.

Ainsi, l'invention a pour objet un dispositif de connexion selon la revendication 1.

Grâce à l'unité de contrôle, un mauvais verrouillage de la plaque ou une fuite d'hydrogène est détecté(e) et donc une connexion défectueuse est identifiée, ce qui permet de réduire les risques, notamment de fuites d'hydrogènes.

Selon des modes de réalisation particuliers de l'invention, le dispositif de connexion présente l'une ou plusieurs des caractéristiques optionnelles des revendications 2 à 7, prise(s) individuellement ou selon toute combinaison techniquement réalisable.

L'invention concerne également un ensemble d'alimentation en hydrogène d'un véhicule selon la revendication 8 ou 9.

L'invention et ses avantages seront mieux compris à la lecture de la description qui suit, donnée uniquement à titre d'exemple non limitatif et faite en référence aux dessins annexés, parmi lesquels :
- [Fig 1] la Figure 1 est une vue schématique d'un ensemble d'alimentation en hydrogène d'un véhicule selon l'invention comprenant un dispositif de connexion ;
- [Fig 2] la Figure 2 est une vue schématique du dispositif de connexion de la Figure 1, la première plaque étant en position de déconnexion ; et
- [Fig 3] la Figure 3 est une vue schématique du dispositif de connexion de la Figure 1, la première plaque étant en position de connexion.

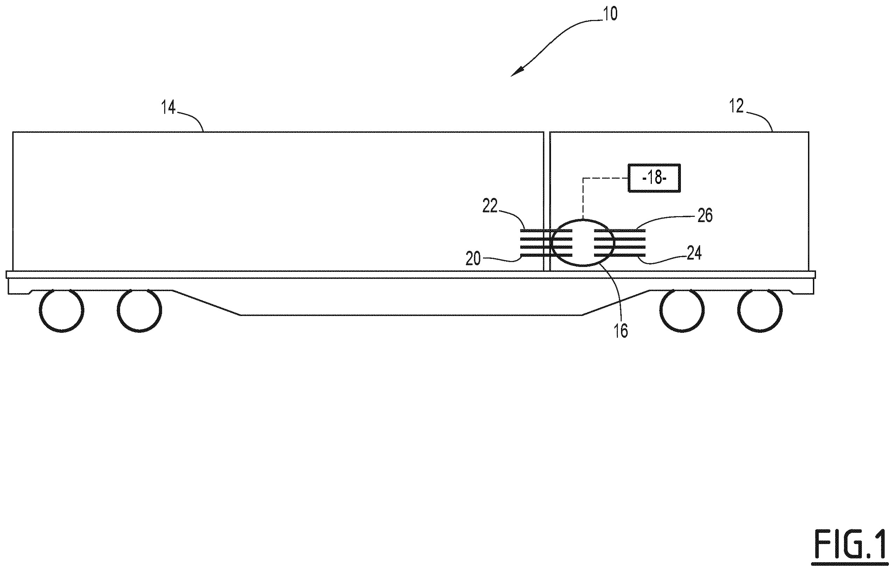

La Figure 1 illustre un ensemble d'alimentation en hydrogène 10 d'un véhicule.

L'ensemble d'alimentation 10 comprend un système de stockage d'hydrogène 12, une unité consommatrice d'hydrogène 14, un dispositif de connexion 16, et une unité de commande 18.

Le véhicule alimenté est par exemple un véhicule ferroviaire, comme une locomotive, une locomotive et un tender accouplés, ou un train complet.

L'unité consommatrice d'hydrogène 14 est par exemple une pile à combustible alimentant électriquement un moteur électrique de traction du véhicule, notamment propulsant une locomotive de traction dans le cas d'un véhicule ferroviaire.

En particulier, l'unité consommatrice d'hydrogène 14 utilise de l'hydrogène comme source d'énergie électrique.

A cet effet, l'unité consommatrice d'hydrogène 14 comprend par exemple un conduit d'alimentation en hydrogène 20.

Par ailleurs, l'unité consommatrice d'hydrogène 14 comprend avantageusement également au moins un conduit de connexion pour moyens secondaires 22.

Plus particulièrement, les moyens secondaires sont choisis parmi un fluide caloporteur, un courant électrique et une mise à la terre.

Par exemple, comme illustré sur la Figure 1, l'unité consommatrice d'hydrogène 14 comprend trois conduits de connexion pour moyens secondaires 22.

Le système de stockage d'hydrogène 12 est par exemple un réservoir adapté pour stocker de l'hydrogène, notamment de l'hydrogène sous forme solide, liquide ou gazeuse et délivrant de l'hydrogène sous forme gazeuse, par exemple à une pression de 10 bars.

Comme illustré sur la Figure 1, le système de stockage d'hydrogène 12 comprend un conduit de livraison d'hydrogène 24 destiné à être connecté au conduit d'alimentation en hydrogène 20 de l'unité consommatrice d'hydrogène 14 afin d'alimenter en hydrogène l'unité consommatrice d'hydrogène 14 par le système de stockage 12.

Par ailleurs, le système de stockage d'hydrogène 12 comprend avantageusement également au moins un conduit de connexion pour moyens secondaires 26, et par exemple trois conduits 26 comme illustré sur la Figure 1.

En particulier, chacun des conduits 26 du système de stockage d'hydrogène 12 est destiné à être connecté à l'un des conduits 22 de l'unité consommatrice d'hydrogène 14 de sorte à autoriser une connexion du moyen secondaire correspondant entre l'unité consommatrice d'hydrogène 14 et le système de stockage 12.

L'unité de commande 18 est configurée pour commander l'alimentation en hydrogène de l'unité consommatrice d'hydrogène 14 par le système de stockage 12.

En particulier, l'unité de commande 18 est configurée pour commander un enclenchement ou un arrêt de l'alimentation en hydrogène.

De préférence, l'unité de commande 18 est également configurée pour commander une mise en communication opérationnelle de chacun de moyens secondaires entre l'unité consommatrice d'hydrogène 14 et le système de stockage 12.

Le dispositif de connexion 16 est destiné à connecter le système de stockage d'hydrogène 12 et l'unité consommatrice d'hydrogène 14, et en particulier le conduit d'alimentation en hydrogène 20 de l'unité consommatrice 14 avec le conduit de livraison d'hydrogène 24 du système de stockage 12, et également avantageusement chacun des conduits de connexion pour moyens secondaires 22 de l'unité consommatrice 14 avec le conduit de connexion pour moyens secondaires 26 correspondant du système de stockage 12.

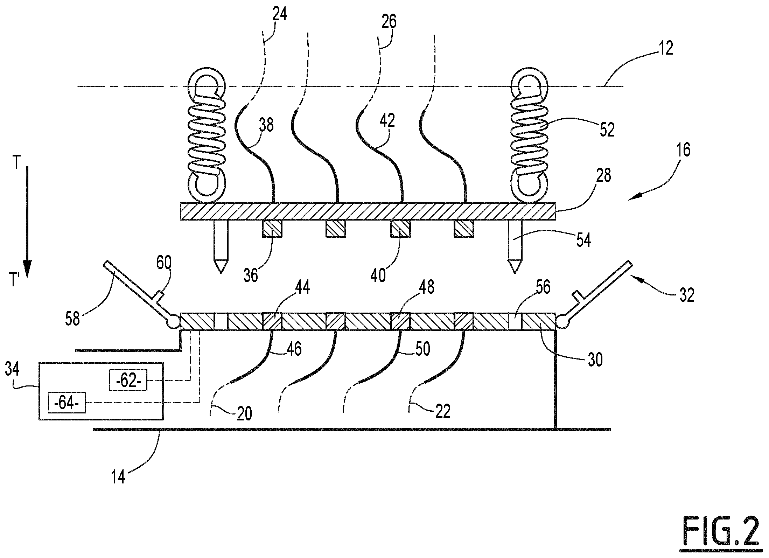

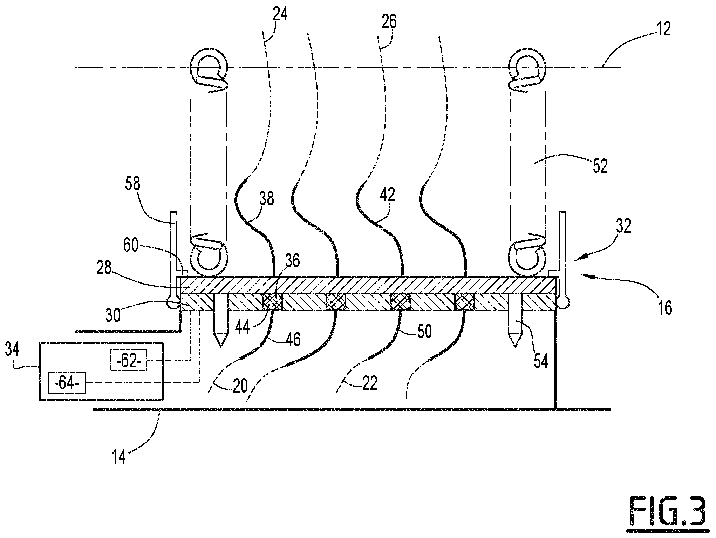

Comme cela est visible sur les Figures 2 et 3, le dispositif de connexion 16 comprend une première plaque 28 et une deuxième plaque 30, la première plaque 28 et la deuxième plaque 30 étant mobiles l'une par rapport à l'autre entre une position de connexion et une position de déconnexion du dispositif de connexion 16.

Le dispositif de connexion 16 comprend, en outre, une unité de verrouillage 32 du dispositif de connexion 16 en position de connexion et une unité de contrôle 34.

La première plaque 28 comprend une première interface de connexion 36 délimitant un premier conduit 38 connecté fluidiquement au système de stockage d'hydrogène 12.

Plus particulièrement, le premier conduit 38 de la première plaque 28 est raccordé ou confondu avec le conduit de livraison d'hydrogène 24 du système de stockage 12.

De préférence, la première plaque 28 comprend au moins une première interface de connexion secondaire 40 délimitant un premier conduit secondaire 42.

Par exemple, comme illustré sur la Figure 1, la première plaque 28 comprend trois premières interfaces de connexion secondaire 40 délimitant chacune un premier conduit secondaire 42 raccordé ou confondu avec l'un des conduits 26 du système de stockage d'hydrogène 12.

De préférence, la première plaque 28 est liée au système de stockage d'hydrogène 12, et est de préférence solidaire du système de stockage d'hydrogène 12.

La deuxième plaque 30 comprend une deuxième interface de connexion 44 délimitant un second conduit 46 connecté fluidiquement à l'unité consommatrice d'hydrogène 14.

Avantageusement, la forme de la deuxième interface de connexion 44 est complémentaire de celle de la première interface de connexion 36. Par exemple, la deuxième interface de connexion 44 est apte à s'emboiter dans la première interface de connexion 36

Plus particulièrement, le second conduit 46 de la deuxième plaque 30 est raccordé ou confondu avec le conduit d'alimentation en hydrogène 20 de l'unité consommatrice d'hydrogène 14.

De préférence, la deuxième plaque 30 comprend au moins une deuxième interface de connexion secondaire 48 délimitant un deuxième conduit secondaire 50.

Par exemple, comme illustré sur la Figure 1, la deuxième plaque 30 comprend trois deuxièmes interfaces de connexion secondaire 48 délimitant chacune un deuxième conduit secondaire 50 raccordé ou confondu avec l'un des conduits 22 de l'unité consommatrice d'hydrogène 14.

De préférence, la deuxième plaque 30 est mécaniquement fixée sur l'unité consommatrice d'hydrogène 14.

Par exemple, la première plaque 28 est mobile par rapport à la deuxième plaque 30 entre la position de connexion du dispositif de connexion 16 illustrée sur la Figure 3 et la position de déconnexion du dispositif de connexion 16 illustrée sur la Figure 2.

Plus particulièrement, la deuxième plaque 30 est par exemple fixe et la première plaque 28 est mobile en translation selon un axe de translation T-T' entre la position de connexion du dispositif de connexion 16 dans laquelle la première plaque 28 s'étend contre la deuxième plaque 30 et la position de déconnexion du dispositif de connexion 16 dans laquelle les deux plaques 28, 30 sont à l'écart l'une de l'autre.

En variante, la deuxième plaque 30 est par exemple mobile en translation selon un axe de translation T-T' entre la position de connexion et la position de déconnexion du dispositif de connexion 16 et la première plaque 28 est fixe.

Comme illustré sur la Figure 3, dans la position de connexion du dispositif de connexion 16, la première interface de connexion 36 est connectée à la deuxième interface de connexion 44, autorisant une circulation d'hydrogène entre le premier conduit 38 et le second conduit 46 et ainsi une circulation d'hydrogène entre le système de stockage 12 et l'unité consommatrice d'hydrogène 14.

De préférence, dans la position de connexion du dispositif de connexion 16, chacune des premières interfaces de connexion secondaires 40 est connectée à l'une des deuxièmes interfaces de connexion secondaires 48 autorisant une circulation de moyens secondaires entre le premier conduit 42 et le deuxième conduit secondaire 50 et ainsi une circulation de moyens secondaires, tel qu'un fluide caloporteur par exemple, entre le système de stockage 12 et l'unité consommatrice d'hydrogène 14.

Comme illustré sur la Figure 2, dans la position de déconnexion, la première interface de connexion 36 est écartée de la deuxième interface de connexion 44.

De même, chacune des premières interfaces de connexion secondaires 40 est écartée des interfaces de connexion secondaires 48.

Plus particulièrement, dans la position de déconnexion, il n'y a pas de circulation d'hydrogène entre le système de stockage 12 et l'unité consommatrice d'hydrogène 14, ni de circulation de moyens secondaires.

De préférence, le dispositif de connexion 16 comprend au moins un système de retenue 52, comme par exemple un ressort, configuré pour compenser la masse de la première plaque 28 ou de la deuxième plaque 30.

Par exemple, comme illustré sur les Figures 2 et 3, le dispositif de connexion 16 comprend deux systèmes de retenue 52 fixés sur la première plaque 28 pour compenser la masse de la première plaque 28 lors de la translation entre les deux positions et ainsi faciliter la mobilité de la première plaque 28.

En particulier, dans le mode de réalisation où les systèmes de retenue 52 sont des ressorts, chacun des ressorts est en position de repos lorsque le dispositif de connexion 16 est en position de déconnexion et en position de travail lorsque le dispositif de connexion 16 est en position de connexion.

Avantageusement, l'une de la première plaque 28 et de la deuxième plaque 30 comprend au moins un pion de centrage 54 configuré pour coopérer avec un orifice de centrage 56 ménagé dans l'autre de la première plaque 28 et de la deuxième plaque 30.

Par exemple, comme illustré sur la figure 3 dans la position de connexion, la première plaque 28 comprend deux pions de centrage 54 coopérant chacun avec un orifice de centrage 56 ménagé dans la deuxième plaque 30.

Cette coopération entre au moins un pion de centrage 54 et un orifice de centrage 56 permet de faciliter le positionnement de la première plaque 28 par rapport à la deuxième plaque 30 afin de passer le dispositif de connexion 16 dans sa position de connexion.

L'unité de verrouillage 32 du dispositif de connexion 16 en position de connexion comprend par exemple au moins un bras 58 fixé sur la première plaque 28 ou la deuxième plaque 30 de manière mobile entre une position libre et une position de serrage et de verrouillage, dans laquelle le dispositif de connexion 16 est maintenu en position de connexion.

De préférence, comme illustré sur les figures 2 et 3, l'unité de verrouillage 32 comprend deux bras 58 chacun fixé à l'une des extrémités latérales de la deuxième plaque 30, et notamment par une liaison articulée.

Plus particulièrement, chacun des bras 58 comprend un ergot 60, qui dans la position de serrage est apte à presser puis bloquer la première plaque 28 contre la deuxième plaque 30, comme illustré sur la Figure 3.

L'unité de contrôle 34 est configurée pour détecter un mauvais verrouillage du dispositif de connexion 16 en position de connexion et pour détecter une fuite d'hydrogène affectant la première interface de connexion 36 ou la deuxième interface de connexion 44.

Plus particulièrement, l'unité de contrôle 34 comprend au moins un capteur de position et de verrouillage 62 configuré pour détecter la position de la première plaque 28 par rapport à la deuxième plaque 30 et le verrouillage satisfaisant de l'unité de verrouillage 32.

Par exemple, le capteur de position et de verrouillage 62 est configuré pour vérifier si la première plaque 28 presse correctement la deuxième plaque 30.

De préférence, l'unité de contrôle 34 comprend au moins un capteur de détection 64 configuré pour détecter la présence d'hydrogène entre la première plaque 28 et la deuxième plaque 30 dans le but de détecter une fuite d'hydrogène.

En particulier, le capteur de détection 64 est propre à mesurer la concentration d'hydrogène entre la première plaque 28 et la deuxième plaque 30 et à détecter une concentration anormale.

De préférence, l'unité de contrôle 34 du dispositif de connexion 16 est configurée pour envoyer un signal de commande à l'unité de commande 18 en cas de détection d'un mauvais verrouillage du dispositif de connexion 16en position de connexion ou d'une fuite d'hydrogène de sorte à bloquer l'alimentation en hydrogène de l'unité consommatrice 14 d'hydrogène par le système de stockage 12.

Un procédé de remplacement du système de stockage 12 va maintenant être décrit.

Un premier système de stockage 12 est connecté à l'unité consommatrice 14 d'hydrogène par le biais du dispositif de connexion 16 verrouillé en position de connexion et alimente en hydrogène ladite unité consommatrice 14 d'hydrogène.

L'unité de commande 18 commande un arrêt de l'alimentation en hydrogène.

Le dispositif de connexion 16 est passé en position de déconnexion, par exemple en passant chacun des bras 58 de l'unité de verrouillage 32 en position libre.

Le dispositif de connexion 16 est ainsi passé en position de déconnexion, et en particulier avec ou sans intervention extérieure par l'intermédiaire d'un dispositif de rappel et/ou des systèmes de retenue 52 entrainant un déplacement de la première plaque 28.

Le premier système de stockage 12 est ainsi déconnecté et mis de côté, de préférence avec la première plaque 28 qui est solidaire du premier système de stockage 12.

Un deuxième système de stockage 12 est ensuite fourni.

De préférence, une nouvelle première plaque 28 est liée au deuxième système de stockage 12 et est identique à la première plaque 28 solidaire du premier système de stockage 12.

Le dispositif de connexion 16 est ensuite passé en position de connexion, puis est verrouillé en cette position par l'unité de verrouillage 32.

Ensuite, l'unité de commande 18 commande une alimentation en hydrogène du deuxième système de stockage 12 vers l'unité consommatrice 14.

En cas de détection d'un mauvais verrouillage ou d'une fuite d'hydrogène par l'unité de contrôle, celle-ci envoie un signal de commande à l'unité de commande 18 pour bloquer l'alimentation en hydrogène de l'unité consommatrice 14 d'hydrogène par le système de stockage 12 et ainsi réduire les risques de fuite d'hydrogène.

Par exemple, l'unité de commande 18 contrôle une vanne configurée pour autoriser ou bloquer l'alimentation en hydrogène de l'unité consommatrice 14 d'hydrogène par le système de stockage 12. En cas de réception d'un signal de commande indiquant un mauvais verrouillage ou une fuite d'hydrogène, l'unité de commande 18 contrôle une fermeture de ladite vanne pour bloquer l'alimentation en hydrogène de l'unité consommatrice 14 d'hydrogène par le système de stockage 12.

Grâce à l'unité de contrôle, un mauvais verrouillage de la première plaque 28 ou une fuite d'hydrogène est rapidement et facilement détecté, ce qui permet de réduire les risques, notamment de fuites d'hydrogènes.

Par ailleurs, un tel dispositif de connexion 16 facilite le remplacement du système de stockage 12. En effet, cette connexion du système de stockage 12 sur l'unité consommatrice 14 d'hydrogène se fait en une seule étape par une connexion simultanée de l'hydrogène et des moyens secondaires.

## Revendications

1. Dispositif de connexion (16) entre un système de stockage d'hydrogène (12) et une unité consommatrice d'hydrogène (14) montée à bord d'un véhicule, notamment d'un véhicule ferroviaire, comprenant :
- une première plaque (28) comprenant une première interface de connexion (36) délimitant un premier conduit (38) connecté fluidiquement au système de stockage d'hydrogène (12)
- une deuxième plaque (30) comprenant une deuxième interface de connexion (44) délimitant un second conduit (46) connecté fluidiquement à l'unité consommatrice d'hydrogène (14) ; la première plaque (28) et la deuxième plaque (30) étant mobiles l'une par rapport à l'autre entre une position de connexion et une position de déconnexion du dispositif de connexion (16),
dans la position de connexion, la première interface de connexion (36) étant connectée à la deuxième interface de connexion (44), autorisant une circulation d'hydrogène entre le premier conduit (38) et le second conduit (46),
dans la position de déconnexion, la première interface de connexion (36) étant écartée de la deuxième interface de connexion (44),
le dispositif de connexion (16) comprenant, en outre, une unité de verrouillage (32) du dispositif de connexion (16) en position de connexion,
**caractérisé en ce que** le dispositif de connexion (16) comprend une unité de contrôle (34) configurée pour détecter un mauvais verrouillage du dispositif de connexion (16) en position de connexion et pour détecter une fuite d'hydrogène affectant la première interface de connexion (36) ou la deuxième interface de connexion (44),
le dispositif de connexion (16) comprenant au moins un système de retenue (52) configuré pour compenser la masse de la première plaque (28) ou de la deuxième plaque (30).

2. Dispositif de connexion (16) selon la revendication 1, dans lequel l'unité de contrôle (34) comprend au moins un capteur de détection (64) configuré pour détecter la présence d'hydrogène issue d'une fuite entre la première plaque (28) et la deuxième plaque (30).

3. Dispositif de connexion (16) selon la revendication 1 ou 2, dans lequel l'unité de contrôle (34) comprend au moins un capteur de position et de verrouillage (62) configuré pour détecter la position de la première plaque (28) par rapport à la deuxième plaque (30) et le verrouillage satisfaisant de l'unité de verrouillage (32).

4. Dispositif de connexion (16) selon l'une quelconque des revendications précédentes, dans lequel la première plaque (28) comprend au moins une première interface de connexion secondaire (40) délimitant un premier conduit secondaire (42), la deuxième plaque (30) comprenant au moins une deuxième interface de connexion secondaire (48) délimitant un second conduit secondaire (50),
dans la position de connexion du dispositif de connexion (16), chacune des premières interfaces de connexion secondaires (40) étant connectée à l'une des deuxièmes interfaces de connexion secondaires (48) autorisant une circulation de moyens secondaires entre le premier conduit (42) et le second conduit secondaire (50).

5. Dispositif de connexion (16) selon la revendication 4, dans lequel les moyens secondaires sont choisis parmi un fluide caloporteur, un courant électrique, une mise à la terre.

6. Dispositif de connexion (16) selon l'une quelconque des revendications précédentes, dans lequel l'unité de verrouillage (32) comprend au moins un bras (58) fixé sur la première plaque (28) ou la deuxième plaque (30) de manière mobile entre une position libre et une position de serrage et de verrouillage, dans laquelle le dispositif de connexion (16) est maintenu en position de connexion.

7. Dispositif de connexion (16) selon l'une quelconque des revendications précédentes, dans lequel l'une de la première plaque (28) et de la deuxième plaque (30) comprend au moins un pion de centrage (54) configuré pour coopérer avec un orifice de centrage (56) ménagé dans l'autre de la première plaque (28) et de la deuxième plaque (30).

8. Ensemble (10) d'alimentation en hydrogène d'un véhicule, notamment un véhicule ferroviaire, l'ensemble (10) comprenant :
- un système de stockage d'hydrogène (12),
- une unité consommatrice d'hydrogène (14),
- un dispositif de connexion (16) selon l'une quelconque des revendications précédentes, et
- une unité de commande (18) configurée pour commander l'alimentation en hydrogène de l'unité consommatrice d'hydrogène (14) par le système de stockage (12).

9. Ensemble (10) selon la revendication 8, dans lequel l'unité de contrôle (34) du dispositif de connexion (16) est configurée pour envoyer un signal de commande à l'unité de commande (18) en cas de détection d'un mauvais verrouillage du dispositif de connexion (16) en position de connexion ou d'une fuite d'hydrogène de sorte à bloquer l'alimentation en hydrogène de l'unité consommatrice d'hydrogène (14) par le système de stockage (12).

## Patentansprüche

1. Verbindungsvorrichtung (16) zwischen einem Wasserstoffspeichersystem (12) und einer Wasserstoffverbrauchseinheit (14), die an Bord eines Fahrzeugs, insbesondere eines Schienenfahrzeugs, angebracht ist, umfassend:
- eine erste Platte (28) mit einer ersten Verbindungsschnittstelle (36), die eine erste Leitung (38) begrenzt, die fluidisch mit dem Wasserstoffspeichersystem (12) verbunden ist,
- eine zweite Platte (30) mit einer zweiten Verbindungsschnittstelle (44), die eine zweite Leitung (46) begrenzt, die fluidisch mit der Wasserstoffverbrauchseinheit (14) verbunden ist;
wobei die erste Platte (28) und die zweite Platte (30) bezüglich einander zwischen einer Verbindungsposition und einer Trennposition der Verbindungsvorrichtung (16) beweglich sind,
wobei in der Verbindungsposition die erste Verbindungsschnittstelle (36) mit der zweiten Verbindungsschnittstelle (44) verbunden ist, wodurch ein Wasserstofffluss zwischen der ersten Leitung (38) und der zweiten Leitung (46) ermöglicht wird, wobei in der Trennposition die erste Verbindungsschnittstelle (36) von der zweiten Verbindungsschnittstelle (44) beabstandet ist,
wobei die Verbindungsvorrichtung (16) ferner eine Verriegelungseinheit (32) der Verbindungsvorrichtung (16) in der Verbindungsposition umfasst, **dadurch gekennzeichnet, dass** die Verbindungsvorrichtung (16) eine Steuereinheit (34) umfasst, die dazu ausgebildet ist, eine fehlerhafte Verriegelung der Verbindungsvorrichtung (16) in der Verbindungsposition zu entdecken und ein Wasserstoffleck an der ersten Verbindungsschnittstelle (36) oder der zweiten Verbindungsstelle (44) zu entdecken,
wobei die Verbindungsvorrichtung (16) wenigstens ein Rückhaltesystem (52) umfasst, das dazu ausgebildet ist, die Masse der ersten Platte (28) oder der zweiten Platte (30) auszugleichen.

2. Verbindungsvorrichtung (16) nach Anspruch 1, wobei die Steuereinheit (34) wenigstens einen Detektionssensor (64) umfasst, der dazu ausgebildet ist, das Vorhandensein von Wasserstoff aus einem Leck zwischen der ersten Platte (28) und der zweiten Platte (30) zu erkennen.

3. Verbindungsvorrichtung (16) nach Anspruch 1 oder 2, wobei die Steuereinheit (34) wenigstens einen Positions- und Verriegelungssensor (62) umfasst, der dazu ausgebildet ist, die Position der ersten Platte (28) relativ zur zweiten Platte (30) und die zufriedenstellende Verriegelung der Verriegelungseinheit (32) zu erkennen.

4. Verbindungsvorrichtung (16) nach einem der vorhergehenden Ansprüche, wobei die erste Platte (28) wenigstens eine erste sekundäre Verbindungsschnittstelle (40) umfasst, die einen ersten sekundären Kanal (42) begrenzt, wobei die zweite Platte (30) wenigstens eine zweite sekundäre Verbindungsschnittstelle (48) umfasst, die einen zweiten sekundären Kanal (50) begrenzt,
wobei in der Verbindungsposition der Verbindungsvorrichtung (16) jede der ersten sekundären Verbindungsschnittstellen (40) mit einer der zweiten sekundären Verbindungsschnittstellen (48) verbunden ist, wodurch ein Fluss von sekundären Mitteln zwischen dem ersten Kanal (42) und dem zweiten sekundären Kanal (50) ermöglicht wird.

5. Verbindungsvorrichtung (16) nach Anspruch 4, wobei die sekundären Mittel aus einem Wärmeträgerfluid, einem elektrischen Strom oder einer Erdung gewählt sind.

6. Verbindungsvorrichtung (16) nach einem der vorhergehenden Ansprüche, wobei die Verriegelungseinheit (32) wenigstens einen Arm (58) umfasst, der an der ersten Platte (28) oder der zweiten Platte (30) beweglich zwischen einer freien Position und einer Klemm- und Verriegelungsposition befestigt ist, in der die Verbindungsvorrichtung (16) in der Verbindungsposition gehalten wird.

7. Verbindungsvorrichtung (16) nach einem der vorhergehenden Ansprüche, wobei eine aus erster Platte (28) und zweiter Platte (30) wenigstens einen Zentrierstift (54) umfasst, der dazu ausgebildt ist, mit einer in der anderen aus erster Platte (28) und zweiter Platte (30) ausgenommenen Zentrieröffnung (56) zusammenzuwirken.

8. Wasserstoffversorgungsvorrichtung (10) für ein Fahrzeug, insbesondere ein Schienenfahrzeug, wobei die Vorrichtung (10) umfasst:
- ein Wasserstoffspeichersystem (12),
- eine Wasserstoffverbrauchseinheit (14),
- eine Verbindungsvorrichtung (16) nach einem der vorhergehenden Ansprüche und
- eine Steuereinheit (18), die dazu ausgebildet ist, die Wasserstoffzufuhr von der Wasserstoffverbrauchseinheit (14) durch das Speichersystem (12) zu steuern.

9. Anordnung (10) nach Anspruch 8, wobei die Steuereinheit (34) der Verbindungsvorrichtung (16) dazu ausgebildet ist, ein Steuersignal an die Steuereinheit (18) zu senden, wenn eine fehlerhafte Verriegelung der Verbindungseinrichtung (16) in der Verbindungsposition oder ein Wasserstoffleck festgestellt wird, um die Wasserstoffzufuhr von der Wasserstoffverbrauchseinheit (14) durch das Speichersystem (12) zu blockieren.

## Claims

1. A connection device (16) between a hydrogen storage system (12) and a hydrogen-consuming unit (14) mounted on-board a vehicle, particularly a railway vehicle, comprising:
- a first plate (28) comprising a first connection interface (36) delimiting a first duct (38) fluidically connected to the hydrogen storage system (12);
- a second plate (30) comprising a second connection interface (44) delimiting a second duct (46) fluidically connected to the hydrogen-consuming unit (14); the first plate (28) and the second plate (30) being movable relative to each other between a connection position and a disconnection position of the connection device (16),
in the connection position, the first connection interface (36) is connected to the second connection interface (44), allowing a hydrogen flow between the first duct (38) and the second duct (46),
in the disconnected position, the first connection interface (36) being spaced apart from the second connection interface (44),
the connection device (16) further comprising a locking unit (32) of the connection device (16) in the connection position,
**characterised in that** the connection device (16) comprises a control unit (34) configured to detect poor locking of the connection device (16) in the connected position and to identify a hydrogen leak affecting the first connection interface (36) or the second connection interface (44),
the connection device (16) comprising at least one retention system (52) configured to compensate for the mass of the first plate (28) or the second plate (30).

2. The connection device (16) according to claim 1, wherein the control unit (34) comprises at least one detection sensor (64) configured to detect the presence of hydrogen from a leak between the first plate (28) and the second plate (30).

3. The connection device (16) according to claim 1 or 2, wherein the control unit (34) comprises at least one position and locking sensor (62) configured to detect the position of the first plate (28) relative to the second plate (30) and satisfactory locking of the locking unit (32).

4. The connection device (16) according to any one of the preceding claims, wherein the first plate (28) comprises at least one first secondary connection interface (40) delimiting a first secondary duct (42), the second plate (30) comprising at least one second secondary connection interface (48) delimiting a second secondary duct (50), in the connection position of the connection device (16), each of the first secondary connection interfaces (40) being connected to one of the second secondary connection interfaces (48) allowing a flow of secondary utilities between the first duct (42) and the second secondary duct (50).

5. The connection device (16) according to claim 4, wherein the secondary utilities are chosen from a heat transfer fluid, an electric current, grounding.

6. The connection device (16) according to any one of the preceding claims, wherein the locking unit (32) comprises at least one arm (58) movably attached to the first plate (28) or the second plate (30) between a free position and a clamping and locking position, wherein the connection device (16) is held in the connection position.

7. The connection device (16) according to any one of the preceding claims, wherein one of the first plate (28) or the second plate (30) comprises at least one centring pin (54) configured to cooperate with a centring hole (56) arranged in the other of the first plate (28) or the second plate (30).

8. An assembly (10) for supplying hydrogen to a vehicle, particularly a railway vehicle, the assembly (10) comprising:
- a hydrogen storage system (12),
- a hydrogen-consuming unit (14),
- a connection device (16) according to any one of the preceding claims, and
- a control unit (18) configured to control the hydrogen supply to the hydrogen-consuming unit (14) by the storage system (12).

9. The assembly (10) according to claim 8, wherein the control unit (34) of the connection device (16) is configured to send a control signal to the control unit (18) in the event of detection of poor locking of the connection device (16) in the connection position or a hydrogen leak, so as to lock the hydrogen supply to the hydrogen-consuming unit (14) by the storage system (12).
